Europäisches Patentamt

European Patent Office

Office européen des brevets

(11) Numéro de publication: **0 283 398 B1**

## FASCICULE DE BREVET EUROPEEN

(45) Date de publication de fascicule du brevet: **02.09.92**  (51) Int. Cl.⁵: **H01H 3/10**, B60R 16/00, F16D 3/16

(21) Numéro de dépôt: **88400613.1**

(22) Date de dépôt: **15.03.88**

(54) **Commutateur électrique comportant une manette de commande coudée.**

(30) Priorité: **17.03.87 FR 8703657**

(43) Date de publication de la demande:
**21.09.88 Bulletin  88/38**

(45) Mention de la délivrance du brevet:
**02.09.92 Bulletin  92/36**

(84) Etats contractants désignés:
**DE ES GB IT**

(56) Documents cités:
**DE-B- 1 156 869**
**US-A- 3 392 548**

(73) Titulaire: **JAEGER**
**2, rue Baudin**
**F-92303 Levallois-Perret(FR)**

(72) Inventeur: **Gauthier, Christian**
**47, rue Descartes**
**F-75005 Paris(FR)**
Inventeur: **Savary, Jean Michel**
**1, rue Petit**
**F-92110 Clichy(FR)**

(74) Mandataire: **Schrimpf, Robert et al**
**Cabinet Regimbeau 26, Avenue Kléber**
**F-75116 Paris(FR)**

# Description

La présente invention concerne le domaine des commutateurs électriques, en particulier mais non exclusivement pour véhicules automobiles.

La présente invention concerne plus précisément un commutateur électrique dont la manette de commande, destinée à être entraînée en rotation pour commander les organes actifs internes du commutateur, est coudée.

L'utilisation d'une manette de commande coudée, pour commutateurs, est souhaitée entre autre pour faciliter l'intégration du commutateur dans le tableau de bord de véhicules automobiles, pour harmoniser les commandes électriques du véhicule à l'esthétique générale du tableau de bord, et pour améliorer l'agrément de manoeuvre des commandes.

La Demanderesse a déjà envisagé diverses solutions pour réaliser une telle manette de commande coudée pour commutateurs électriques. Elle a ainsi envisagé l'utilisation d'un flexible, d'engrenages coniques, ou encore d'un système du type cardan. Toutefois, toutes ces dispositions présentent différents inconvénients.

Les flexibles présentent une hystérésis et ne retransmettent pas rigidement le mouvement de rotation appliqué.

Les engrenages coniques présentent un jeu de fonctionnement et produisent des réactions importantes sur les paliers.

Enfin les systèmes du type cardan comprenant deux fourches reliées par un croisillon articulé sont complexes, coûteux et compliquent les opérations d'assemblage.

Le document DE-B-1 156 869 décrit une manette de commande comprenant un arbre menant susceptible de tourner autour d'un axe principal, un arbre mené susceptible de tourner autour d'un axe secondaire non parallèle à l'axe principal, un tourillon solidaire de l'un des arbres, qui possède une enveloppe cylindrique centrée sur un axe auxiliaire coplanaire de l'axe de l'arbre qui le porte et transversal à cet axe, et une fourchette solidaire de l'autre arbre, ayant une première paire de branches dont la largeur d'ouverture est egale au diamètre du tourillon, dont un plan de symétrie équidistant des surfaces internes en regard des branches de ladite paire de branches inclut l'axe de l'arbre qui la porte et dont lesdites branches sont excentrées par rapport à cet axe.

La présente invention a pour but de proposer un commutateur électrique comprenant une manette de commande coudée qui soit à la fois simple, robuste et fiable et, ne complique pas les opérations d'assemblage, et surtout autorise une translation de la manette selon son axe.

Ce but est atteint selon la présente invention grâce à un commutateur électrique comportant un boîtier qui porte une manette de commande du type précité comprenant un arbre menant susceptible de tourner autour d'un axe principal, un arbre mené susceptible de tourner autour d'un axe secondaire non parallèle à l'axe principal, un tourillon solidaire de l'un des arbres, qui possède une enveloppe cylindrique centrée sur un axe auxiliaire coplanaire de l'axe de l'arbre qui le porte et transversal à cet axe, et une fourchette solidaire de l'autre arbre, ayant une première paire de branches dont la largeur d'ouverture est égale au diamètre du tourillon, dont un plan de symétrie équidistant des surfaces internes en regard des branches de ladite paire de branches inclut l'axe de l'arbre qui la porte et dont lesdites branches sont excentrées par rapport à cet axe, caractérisé par le fait que l'un des arbres est guidé d'une part par une rotule (68) engagée dans un alésage cylindrique (20) du boîtier, et d'autre part par un guidage oblong formé dans le boîtier et s'étendant transversalement au plan défini par l'axe principal et l'axe secondaire de sorte que cet arbre soit susceptible d'effectuer un mouvement de débattement dans une direction transversale au plan défini par l'axe principal et l'axe secondaire.

Selon un mode de réalisation la fourchette comprend une deuxième paire de branches dont le plan de symétrie équidistant des surfaces internes en regard des branches est le même que celui équidistant des surfaces internes en regard (37, 39) des branches (36, 38) de la première paire de branches.

De préférence selon un mode de réalisation, le contact entre le fond de la fourchette et le tourillon est défini par une calotte convexe.

Selon un mode de réalisation considéré actuellement comme préférentiel, le tourillon porte une calotte d'enveloppe sphérique centrée sur le point d'intersection de l'axe principal et de l'axe auxiliaire, et destinée à reposer contre le fond de la fourchette.

Par ailleurs de façon avantageuse, un ressort sollicite l'arbre mené en appui contre l'arbre menant.

Cette disposition permet outre le mouvement de rotation, d'entraîner l'arbre mené en translation selon son axe, sans perte de course, par action sur l'arbre menant.

D'autres caractéristiques, buts et avantages de la présente invention apparaîtront à la lecture de la description détaillée qui va suivre, et en regard des dessins annexés donnés à titre d'exemple non limitatif et sur lesquels :

- la figure 1 représente une vue schématique en coupe longitudinale d'une manette de commande d'un commutateur conforme à la présente invention,

- la figure 2 représente une vue latérale d'une fourchette et d'un tourillon associés, utilisés dans un commutateur conforme à la présente invention, selon la direction référencée II sur la figure 1,
- la figure 3 représente une vue en coupe transversale de la manette selon un plan de coupe référencé III sur la figure 1, et
- la figure 4 représente une autre vue en coupe transversale de la même manette selon un plan de coupe référencé IV sur la figure 1.

La manette de commutateur illustrée sur les figures annexées comprend pour l'essentiel un boîtier 10, un arbre menant 30 et un arbre mené 60.

Le boîtier 10 est formé en combinaison d'un élément 12 et d'un capuchon 22.

L'arbre menant 30 est guidé en rotation, par le boîtier, autour d'un axe dit principal 32.

L'arbre menant 30 comprend pour l'essentiel un tronc cylindrique 31 centré sur l'axe principal 32 et pourvu à une extrémité d'une fourchette 34.

Le tronc cylindrique 31 de l'arbre menant 30 est engagé dans un alésage cylindrique complémentaire 13 ménagé dans l'élément 12 du boîtier. L'arbre menant 30 émerge de part et d'autre de l'alésage 13. La fourchette 34 portée par une extrémité du tronc cylindrique 31 est placée dans une chambre 15 interne au boîtier.

L'arbre mené 60 est quant à lui guidé en rotation autour d'un axe dit secondaire 62. L'axe secondaire 62 n'est pas parallèle à l'axe principal 32. Selon l'illustration donnée sur les dessins annexés, l'axe secondaire 62 est incliné par rapport à l'axe principal 32 d'un angle $\alpha$ de l'ordre de 135°. Cette valeur d'inclinaison relative n'est cependant donnée qu'à titre d'exemple non limitatif.

L'arbre mené 60 comprend un tronc cylindrique 64 au moins sensiblement centré sur l'axe secondaire 62. Le tronc 64 est prolongé, au niveau de son extrémité adjacente à l'arbre menant 30, par un fût 66, de plus faible section, coaxial à l'arbre mené 60, qui porte un tourillon 80.

De plus, le tronc 64 est pourvu, à sa seconde extrémité 63, opposée à l'arbre menant 30, d'un bras 102. Le bras 102 s'étend radialement par rapport à l'axe secondaire 62 et est muni sur son extrémité libre d'un doigt de commande 100.

Le tourillon 80 possède une enveloppe extérieure généralement cylindrique centrée sur un axe auxiliaire 82.

L'axe auxiliaire 82 est coplanaire de l'axe secondaire 62. De plus, l'axe auxiliaire 82 est transversal à l'axe secondaire 62.

Plus précisément encore, selon le mode de réalisation préférentiel illustré sur les figures annexées, l'inclinaison $\beta$ définie entre l'axe auxiliaire 82 et l'axe secondaire 62 correspond à la moitié de l'inclinaison $\alpha$ définie entre l'axe principal 32 et l'axe secondaire 62.

L'arbre mené 60 est guidé en rotation autour de l'axe 62 par des toiles 14, 16 et 24, 26 solidaires de l'élément 12 et du capuchon 22 du boîtier. Les toiles 14, 16 sont solidaires de l'élément 12. Les toiles 24, 26 sont solidaires du capuchon 22.

Les toiles 14, 24 sont adjacentes à la chambre 15. Elles définissent en combinaison un orifice 18 généralement centré sur l'axe secondaire 62.

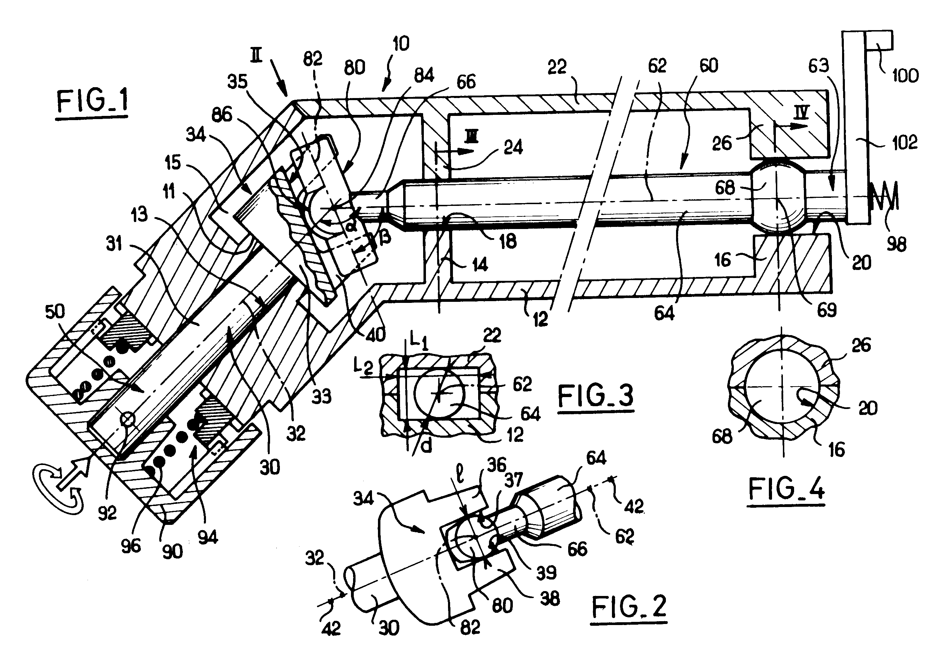

Plus précisément, l'orifice 18 possède un contour rectangulaire. La longueur de l'orifice 18 s'étend perpendiculairement au plan défini par l'axe principal 32 et l'axe secondaire 62. La longueur de l'orifice 18 s'étend par conséquent perpendiculairement au plan de la figure 1.

En d'autres termes, l'orifice 18 possède une largeur $L_1$ constante dans tout plan de coupe parallèle au plan passant par l'axe principal 32 et l'axe secondaire 62.

La largeur $L_1$ de l'orifice 18 est égale au diamètre d du tronc 64 de l'arbre mené 60.

Par contre, la longueur $L_2$ de l'orifice 18 est bien entendu supérieure au diamètre du tronc cylindrique 64 de l'arbre mené 60.

Les toiles 16, 26 sont placées au niveau de l'extrémité 63 de l'arbre mené 60 opposée au tourillon 80. Les toiles 16, 26 définissent en combinaison un orifice 20. L'orifice 20 est cylindrique et centré sur l'axe secondaire 62.

Par ailleurs, le tronc cylindrique 64 de l'arbre mené 60 est pourvu au niveau de son extrémité 63 d'une nervure annulaire 68. Cette nervure est définie par une enveloppe sphérique centrée sur un point 69 qui coïncide avec l'axe secondaire 62. Le diamètre de l'enveloppe sphérique de la nervure 68 coïncide avec le diamètre de l'orifice 20.

La nervure 68 qui forme rotule est engagée dans l'alésage 20 comme illustrée sur la figure 1 annexée.

L'Homme de l'art comprendra aisément que l'engagement défini entre l'arbre mené 60 pourvu de la rotule 68 et les orifices 18 et 20, l'un généralement oblong l'autre cylindrique et centré sur l'axe secondaire 62, autorise un débattement de l'arbre mené 60, perpendiculairement à un plan moyen défini par l'axe principal 32 et l'axe secondaire 62.

Le débattement ainsi autorisé pour l'arbre mené 60 permet un auto-centrage de l'arbre mené 60 de telle sorte que l'axe principal 32 et l'axe secondaire 62 s'intersectent, quelles que soient les tolérances de fabrication du boîtier 10.

La fourchette 34 solidaire de l'arbre menant 30 comprend au moins deux branches 36, 38 qui s'étendent sensiblement parallèlement à l'axe principal 32. Les surfaces internes en regard 37, 39 des branches 36, 38 sont parallèles entre elles et parallèles à l'axe principal 32. Les branches 36, 38 de la fourchette 34 définissent entre elles une ouverture de section droite constante dont la largeur I est égale au diamètre du tourillon 80. Le plan de symétrie référencé 42 sur la figure 2, de la fourchette 34, est coplanaire de l'axe principal 32. En outre, les branches 36, 38 de la fourchette 34, comme illustrées sur la figure 1 annexée, sont excentrées par rapport à l'axe principal 32.

Plus précisément encore, de préférence, comme illustré sur la figure 1 annexée, la fourchette 34 comprend deux paires de branches dont le plan de symétrie 42 équidistant des surfaces internes en regard 37, 39 des branches, inclut l'axe principal 32.

Selon l'illustration donnée sur les figures annexées, une première paire de branches est formée par les branches 36, 38 précitées. Une deuxième paire de branches comprend la branche référencée 40 sur la figure 1. En outre, les deux paires de branches composant la fourchette 34 sont sensiblement symétriques par rapport à un plan passant par l'axe principal 32 et orthogonal au plan défini par cet axe principal 32 et l'axe secondaire 62.

La fourchette 34 possède une embase 33 portant les branches 36, 38 et 40. L'embase 33 dans une section droite transversale à l'axe principal 32 possède des dimensions supérieures au diamètre de l'orifice 13. Ainsi, l'embase 33 de la fourchette 34 repose contre une nervure 11 entourant l'orifice 13 dans la chambre 15.

La surface 35 de l'embase 33 sur laquelle font saillie les branches 36, 38 et 40 s'étend généralement transversalement à l'axe principal 32 et parallèlement à l'axe auxiliaire 82.

L'arbre mené 60 repose contre cette surface 35 par l'intermédiaire d'une calotte d'enveloppe sphérique 86. La calotte 86 d'enveloppe sphérique est formée en saillie sur le tourillon cylindrique 80. Elle est opposée au fût 66 et centrée sur le point d'intersection de l'axe secondaire 62 et de l'axe auxiliaire 82, point référencé 84 sur la figure 1 annexée.

Un ressort 98 intégré au commutateur agit sur l'extrémité 63 de l'arbre mené 60 pour solliciter celui-ci en appui, par l'intermédiaire de la calotte sphérique 86, contre la surface 35 de l'arbre menant 30.

L'arbre menant 30 est pourvu sur son extrémité 50 opposée à la fourchette 34 d'un bouton de commande 90. Le bouton de commande 90 est centré sur l'axe principal 32.

Le bouton de commande 90 peut être fixé sur l'arbre menant 30 par tout moyen classique approprié. Selon le mode de réalisation préférentiel illustré sur les figures annexées, le bouton de commande 90 est fixé sur l'arbre menant 30 par l'intermédiaire d'une goupille radiale 92.

De préférence, des moyens d'indexation 94 schématiquement illustrés sur la figure 1 annexée, coopèrent avec le bouton de commande 90 pour contrôler les déplacements en rotation du bouton de commande 90, et de l'arbre menant 30 associé, autour de l'axe principal 32.

De nombreux moyens d'indexation susceptibles d'être retenus à cet effet ont déjà été proposés. De ce fait, les moyens d'indexation 94 ne seront pas décrits plus en détail par la suite.

Enfin, on notera à l'examen des figures annexées, la présence d'un ressort 96 entre le boîtier 10 et le bouton de commande 90. Le ressort 96 sollicite l'arbre menant 30 vers l'extérieur de la chambre 15 et sollicite par conséquent l'embase 33 de la fourchette 34 contre la nervure 11.

Pour assembler la manette de commande illustrée sur les figures annexées, on procède comme suit.

Dans un premier temps, l'arbre menant 30 équipé de la fourchette 34 est engagé dans l'alésage 13 par la chambre 15. Le ressort 96 est engagé sur l'extrémité 50 de l'arbre menant 30 et le bouton de commande 90 est fixé sur l'arbre menant 30 grâce à la goupille 92.

L'arbre mené 62 est ensuite placé dans le boîtier 10, en prenant soin d'engager le tourillon 80 entre les branches de la fourchette 34. Le capuchon 22 est ensuite fixé sur l'élément 12 du boîtier.

La manette de commande est alors prête à l'emploi.

L'Homme de l'art comprendra à l'examen des figures annexées et à la lecture de la description qui précède que tout mouvement de rotation de l'arbre menant 30 autour de l'axe principal 32 est transmis à l'arbre mené 60 sous forme d'un mouvement de rotation autour de l'axe secondaire 62, par l'intermédiaire de la fourchette 34 et du tourillon 80 associés.

Au cours de ces mouvements de rotation, lorsque l'axe auxiliaire 82 est incliné par rapport au plan contenant l'axe principal 32 et l'axe secondaire 62, le fût 66 de l'arbre mené 60 pénètre dans les évidements définis entre les deux paires de branches composant la fourchette 34.

Comme indiqué précédemment, grâce au débattement de l'arbre mené 60 dans l'orifice 18, perpendiculairement au plan contenant l'axe principal 32 et l'axe secondaire 62, on obtient un auto-centrage de l'arbre mené 60, de telle sorte que l'axe secondaire 62 intersecte l'axe principal 32.

Par ailleurs, le tourillon 80 peut se déplacer selon son axe 82 entre les branches de la fourchette 34. Cette disposition évite tout grippage de la manette.

Par ailleurs, tout mouvement de translation du bouton de commande 90, et donc de l'arbre menant 30 associé, selon l'axe principal 32, vers l'intérieur du boîtier 10, est transmis à l'arbre mené 60,

sous forme d'un mouvement de translation selon l'axe secondaire 62, par l'intermédiaire de l'appui défini entre la surface 35 de la fourchette et la calotte sphérique 86 du tourillon 80.

L'Homme de l'art comprendra par ailleurs aisément que le mouvement de rotation de l'arbre mené 60 au-tour de l'axe secondaire 62, et de translation du même arbre mené 60 selon l'axe secondaire 62, peuvent être commandés tout à fait indépendamment l'un de l'autre ; c'est-à-dire que le mouvement de translation précité peut être obtenu quelle que soit la position angulaire des arbres menant et mené autour de leurs axes respectifs.

Le mouvement de rotation de l'arbre mené 60, autour de l'axe secondaire 62, peut être utilisé pour déplacer à translation un tiroir porte-contact en prise avec le doigt de commande 100. De même, la translation de l'arbre mené 60 selon l'axe secondaire 62 peut être utilisée pour contrôler le déplacement de contacts électriques.

Ainsi, par exemple, selon le mode de réalisation illustré sur les figures annexées, le tourillon 80 est solidaire de l'arbre mené 60, tandis que la fourchette 34 est solidaire de l'arbre menant 30. Cependant, l'Homme de l'art comprendra aisément que le tourillon 80 peut être rendu solidaire de l'arbre menant 30 et la fourchette 34 rendue solidaire de l'arbre mené 60, les dispositions relatives précitées définies entre le tourillon 80 et la fourche 34 restant applicables.

Par ailleurs, on peut envisager de placer des contacts électriques dans la chambre 15, en regard des branches 36, 38, 40 de la fourchette 34, pour modifier la position de ces contacts, et donc leur fonction électrique, lors du déplacement en translation de l'arbre menant 30 parallèlement à l'axe principal 32.

Enfin, le cas échéant, la calotte sphérique 86 en saillie sur le tourillon 80 pourrait être remplacée par une calotte convexe en saillie sur la surface 35 de la fourchette 34.

De préférence, le tourillon 80 et la fourchette 34 sont venus de moulage en extrémité de leurs arbres respectifs.

**Revendications**

1.  Commutateur électrique, en particulier pour véhicules automobiles, comportant un boîtier (10) qui porte une manette de commande du type comprenant :
    - un arbre menant (30) susceptible de tourner autour d'un axe principal (32),
    - un arbre mené (60) susceptible de tourner autour d'un axe secondaire (62) non parallèle à l'axe principal,
    - un tourillon (80) solidaire de l'un des arbres (30, 60), qui possède une enveloppe cylindrique centrée sur un axe auxiliaire (82) coplanaire de l'axe (32, 62) de l'arbre (30, 60) qui le porte et transversal à cet axe, et
    - une fourchette (34) solidaire de l'autre arbre (30, 60), ayant une première paire de branches dont la largeur d'ouverture (1) est égale au diamètre du tourillon (80), dont un plan de symétrie (42) équidistant des surfaces internes en regard (37, 39) des branches (36, 38) de ladite paire de branches inclut l'axe (62, 32) de l'arbre qui la porte et dont lesdites branches (36, 38,) sont excentrées par rapport à cet axe,

caractérisé par le fait que l'un des arbres (60) est guidé d'une part par une rotule (68) engagée dans un alésage cylindrique (20) du boîtier (10), d'autre part par un guidage oblong (18) formé dans le boîtier (10) et s'étendant transversalement au plan défini par l'axe principal (32) et l'axe secondaire (62) de sorte que cet arbre (60) soit susceptible d'effectuer un mouvement de débattement dans une direction transversale au plan défini par l'axe principal (32) et l'axe secondaire (62).

2.  Commutateur selon la revendication 1, caractérisé par le fait que la fourchette (34) comprend une deuxième paire de branches (40) dont le plan de symétrie (42) équidistant des surfaces internes en regard des branches est le même que celui équidistant des surfaces internes en regard (37, 39) des branches (36, 38) de la première paire de branches.

3.  Commutateur selon l'une quelconque des revendications 1 et 2, caractérisé par le fait que le contact entre le fond (35) de la fourchette (34) et le tourillon (80) est défini par une calotte convexe (86).

4.  Commutateur selon l'une quelconque des revendications 1 à 3, caractérisé par le fait que le tourillon (80) porte une calotte d'enveloppe sphérique (86) centrée sur le point (84) d'intersection de l'axe (32, 62) de l'arbre portant le tourillon et de l'axe auxiliaire (82), et destinée à reposer contre le fond (35) de la fourchette (34).

5.  Commutateur selon l'une quelconque des revendications 1 à 4, caractérisé par le fait qu'un ressort (98) sollicite l'arbre mené (60) en appui contre l'arbre menant (30).

6.  Commutateur selon l'une des revendications 1 à 5, caractérisé par le fait que la rotule (68) est plus éloignée de l'extrémité de l'arbre portant soit le tourillon (80) soit la fourchette (34) que le guidage oblong (18).

7. Commutateur selon l'une quelconque des revendications 1 à 6, caractérisé par le fait qu'il comprend des contacts électriques en regard de la fourchette (34), de telle sorte que l'entraînement en translation suivant l'axe (32, 62) de l'arbre (30, 60) qui porte la fourchette (34) puisse déplacer les contacts électriques.

8. Commutateur selon l'une quelconque des revendications 1 à 7, caractérisé par le fait que l'un des arbres (30, 60) est associé à des moyens d'indexation (94) contrôlant ses déplacements à rotation autour de son axe (32, 62).

9. Commutateur selon l'une quelconque des revendications 1 à 8, caractérisé par le fait que le tourillon (80) et la fourche (34) sont venus de moulage en extrémité de leurs arbres respectifs.

10. Commutateur selon l'une quelconque des revendications 1 à 9, caractérisé par le fait que l'inclinaison $\beta$ définie entre l'axe auxiliaire (82) et l'axe secondaire (62) égale la moitié de l'inclinaison $\alpha$ définie entre l'axe principal (32) et l'axe secondaire (62).

**Claims**

1. Electrical switch, in particular for motor vehicles, comprising a housing (10) carrying an operating lever of the type comprising:
   - an input shaft (30) capable of rotating about a principal axis (32),
   - an output shaft (60) capable of rotating about a secondary shaft (62) non-parallel to the principal axis,
   - a journal (80) rigidly connected to one of the shafts (30, 60) and having a cylindrical casing centred on an auxiliary axis (82) coplanar with the axis (32, 62) of the shaft (30, 60) carrying said journal and transverse to this axis, and
   - a fork (34) rigidly connected to the other shaft (30, 60), having a first pair of branches, whose width of aperture (1) is equal to the diameter of the journal (80), of which a plane of symmetry (42) equidistant from the opposite inner surfaces (37, 39) of the branches (36, 38) of said pair of branches includes the axis (62, 32) of the shaft which carries it and whose branches (36, 38) are eccentric relative to this axis,

characterised in that one of the shafts (60) is guided on the one hand by a pivot (68) engaging in a cylindrical bore (20) in the housing (10), and on the other hand by a rectangular guide (18) formed in the housing (10) and extending transverse to the plane defined by the principal axis (32) and the secondary axis (62), and in such a manner that this shaft (60) is capable of effecting a clearance movement in a direction transverse to the plane defined by the principal axis (32) and the secondary axis (62).

2. Electrical switch according to claim 1, characterised in that the fork (34) comprises a second pair of branches (40), whose plane of symmetry (42) equidistant from the opposite inner surfaces of the branches is the same as that which is equidistant from the opposite inner surfaces (37, 38) of the branches (36, 38) of the first pair of branches.

3. Electrical switch according to either of claims 1 or 2, characterised in that the contact between the base (35) of the fork (34) and the journal (80) is defined by a convex cap (86).

4. Electrical switch according to one of claims 1 to 3, characterised in that the journal (80) carries a spherical casing cap (86) centred on the point (84) of intersection between the axis (32, 62) of the shaft carrying the journal and the auxiliary axis (82), and intended to rest against the base (35) of the fork (34).

5. Electrical switch according to one of claims 1 to 4, characterised in that a spring (98) biases the output shaft (60) against the input shaft (30).

6. Electrical switch according to one of claims 1 to 5, characterised in that the pivot (68) is further from the end of the shaft carrying either the journal (80) or the fork (34) than the rectangular guide (18).

7. Electrical switch according to one of claims 1 to 6, characterised in that it comprises electric contacts opposite the fork (34), so that the translational drive along the axis (32, 62) of the shaft (30, 60) carrying the fork (34) can displace the electric contacts.

8. Electrical switch according to one of claims 1 to 7, characterised in that one of the shafts (30, 60) is associated with indexing means (94) which control its rotary displacements about its axis (32, 62).

9. Electrical switch according to one of claims 1 to 8, characterised in that the journal (80) and the fork (34) are moulded at the end of their respective shafts.

10. Electrical switch according to one of claims 1 to 9, characterised in that the incline $\beta$ defined between the auxiliary axis (82) and the secondary axis (62) is equal to half the incline $\alpha$ defined between the principal axis (32) and the secondary axis (62).

**Patentansprüche**

1. Elektrischer Schalter, insbesondere für Kraftfahrzeuge, mit einem Gehäuse (10), das einen Betätigungsgriff trägt, der umfaßt:
   - eine um eine Hauptachse (32) drehbare treibende Welle (30),
   - eine um eine zur Hauptachse nicht parallele Sekundärachse (62) drehbare getriebene Welle (60),
   - einen mit einer der Wellen (30, 60) fest bzw. einstückig verbundenen Drehzapfen (80), der eine zylindrische Hülle aufweist, die zu einer Nebenachse (82) zentriert ist, welche in der gleichen Ebene wie die Achse (32, 62) der den Drehzapfen tragenden Welle (30, 60) angeordnet ist und sich quer zu dieser Achse erstreckt, und
   - eine mit der anderen Welle (30, 60) fest bzw. einstückig verbundene, ein erstes Paar Schenkel aufweisende Gabel (34), bei der die Öffnungsbreite (1) gleich dem Durchmesser des Drehzapfens (80) ist, eine von den sich gegenüberliegenden Innenflächen (37, 39) der Schenkel (36, 38) des genannten Schenkelpaares in gleichem Abstand angeordnete Symmetrieebene (42) die Achse (62, 32) der die Gabel tragenden Welle enthält, und die genannten Schenkel (36, 38) in bezug auf diese Achse versetzt sind, dadurch gekennzeichnet, daß eine der Wellen (60) einerseits durch ein in einer zylindrischen Bohrung (20) des Gehäuses (10) angeordnetes Kugelgelenk (68), andererseits durch eine im Gehäuse (10) ausgebildete langgestreckte Führung (18), die sich quer zu der von der Hauptachse (32) und der Sekundärachse (62) definierten Ebene erstreckt, und in der Weise geführt ist, daß diese Welle (60) eine Ausschlagbewegung in Querrichtung zu der von der Hauptachse (32) und der Sekundärachse (62) definierten Ebene auszuführen vermag.

2. Schalter nach Anspruch 1, dadurch gekennzeichnet, daß die Gabel (34) ein zweites Paar Schenkel (40) aufweist, deren Symmetrieebene (42), die von den sich gegenüberliegenden Innenflächen der Schenkel in gleichem Abstand angeordnet ist, mit der gleich ist, die von den sich gegenüberliegenden Innenflächen (37, 39) der Schenkel (36, 38) des ersten Schenkelpaares gleichen Abstand hat.

3. Schalter nach einem der Ansprüche 1 und 2, dadurch gekennzeichnet, daß die Berührung zwischen der Rückwand (35) der Gabel (34) und dem Drehzapfen (80) an einer konvexen Kalotte (86) stattfindet.

4. Schalter nach einem der Ansprüche 1 bis 3, dadurch gekennzeichnet, daß der Drehzapfen (80) eine Kalotte (86) mit kugelförmiger Hülle trägt, die zum Schnittpunkt (84) der Achse (32, 62) der den Drehzapfen tragenden Welle mit der Nebenachse (82) zentriert und dazu bestimmt ist, sich an der Rückwand (35) der Gabel (34) anzuliegen.

5. Schalter nach einem der Ansprüche 1 bis 4, dadurch gekennzeichnet, daß eine Feder (98) die getriebene Welle (60) an die treibende Welle (30) anpreßt.

6. Schalter nach einem der Ansprüche 1 bis 5, dadurch gekennzeichnet, daß das Kugelgelenk (68) von dem den Drehzapfen (80) oder die Gabel (34) tragenden Ende der Welle weiter entfernt ist als die langgestreckte Führung (18).

7. Schalter nach einem der Ansprüche 1 bis 6, dadurch gekennzeichnet, daß er der Gabel (34) gegenüberliegende elektrische Kontaktstücke aufweist, derart, daß durch Parallelbewegen der die Gabel (34) tragenden Welle (30, 60) in der Richtung der Achse (32, 62) die elektrischen Kontaktstücke fortbewegt werden können.

8. Schalter nach einem der Ansprüche 1 bis 7, dadurch gekennzeichnet, daß eine der Wellen (30, 60) mit Verriegelungseinrichtungen (94) verbunden ist, die ihre Drehverstellung um ihre Achse (32, 62) steuern.

9. Schalter nach einem der Ansprüche 1 bis 8, dadurch gekennzeichnet, daß der Drehzapfen (80) und die Gabel (34) an die Endstücke ihrer zugehörigen Wellen angeformt sind.

10. Schalter nach einem der Ansprüche 1 bis 9, dadurch gekennzeichnet, daß die zwischen der Nebenachse (82) und der Sekundärachse (62) bestehende Neigung (β) gleich der halben Neigung (α) zwischen der Hauptachse (32) und der Sekundärachse (62) ist.

FIG_1

FIG_2

FIG_3

FIG_4

EP 0 283 398 B1